# EUROPEAN PATENT SPECIFICATION

(11) **EP 1 998 587 B1**
(45) Date of publication and mention of the grant of the patent: **26.08.2015**
(21) Application number: 07739365.0
(22) Date of filing: 22.03.2007
(51) Int. Cl.: H04W 28/06, H04W 8/26, H04W 28/18, H04W 92/14

(54) **METHOD FOR COMPRESSING AND SETTING UP WIRELESS ACCESS BEARER AND METHOD FOR TRANSFERRING Iu RAB SETTING**
VERFAHREN ZUR KOMPRIMIERUNG UND EINRICHTUNG EINES DRAHTLOSEN ZUGANGSTRÄGERS UND VERFAHREN ZUR ÜBERTRAGUNG EINER Iu-RAB-EINSTELLUNG
PROCÉDÉ DE COMPRESSION ET DE CONFIGURATION DE PORTEUSE D'ACCÈS SANS FIL ET PROCÉDÉ DE TRANSFERT DE CONFIGURATION Iu RAB

(30) Priority: 22.03.2006 GB 0605705
(43) Date of publication of application: 03.12.2008
(73) Proprietor: NEC Corporation, Minato-ku Tokyo 108-8001 (JP)
(72) Inventor: ROBERTS, Michael, Kanagawa 211-8666 (JP)
(74) Representative: Glawe, Delfs, Moll
(86) International application number: PCT/JP2007/055922
(87) International publication number: WO 2007/116640

(56) References cited:
- WO-A1-2004/084502
- WO-A1-2004/084502
- WO-A2-2004/057823
- JP-A- 2004 507 121
- JP-A- 2006 509 445
- US-A1- 2006 040 645

## Description

### Technical Field

The present invention relates to methods for the compression of Radio Access Bearer (RAB), configuration and for the transfer of such Iu RAB configurations (configuration information) within a mobile radio communication network.

### Background Art

Interface radio access bearer configurations such as the Iu RAB configuration commonly form part of the signaling information transferred between the User Equipment (UE) and the Universal Terrestrial Radio Network (UTRAN) of a mobile radio communications system.

In an attempt to improve call set-up times for a mobile device, and in particular to improve the call set-up times from an IDLE state, it has been found that a major part of the need-data comprises Iu RAB configuration data which can have a size of up to 2.4 K octets. The need-data has to be stored on the user equipment, and eventually retrieved and provided on an uplink channel.

The compression of such configurations would therefore prove particularly advantageous in assisting with the efficiency of radio interface signaling and, in particular, the provision of relatively fast call set-up times.

Patent application US 2006/0040645 A1 describes techniques for efficiently configuring and reconfiguring calls using a set of default configurations and differential encoding. Thereby a parameter set is divided into a first and a second portion, wherein the first portion comprises a fixed portion common to a plurality of sets, and the second portion comprises a variable portion. The disclosed method compresses the fixed portion by allocating of a radio access bearer identifier thereto.

, the method comprising dividing each of the parameter sets into a first portion and a second portion, the first portion comprising a fixed portion common to a plurality of sets, and the second portion comprising a variable portion; and compressing the fixed portion through allocation of a radio access bearer, RAB, identifier thereto, wherein
the parameter sets each comprise an Iu RAB configuration,
the RAB identifier is associated with the RAB within a Public Land Mobile Network, PLMN, characterized in that,
the association is achieved via operations and maintenance procedures within the network.

According to a second aspect of the present invention, there is provided a method of compressing radio access bearer, RAB, parameter sets, the method comprising: dividing each of the parameter sets into a first portion and a second portion, the first portion comprising a fixed portion common to a plurality of sets, and the second portion comprising a variable portion; and compressing the fixed portion through allocation of a radio access bearer identifier thereto,
wherein the parameter sets each comprise Iu RAB configuration
the method further comprising:
transferring the radio access bearer parameter sets between user equipment and a mobile radio communications network associated with the user equipment,
re-establishing previously released radio access bearers in a network upon receipt of the transferred radio access bearer parameter sets, including the step of referring to a stored radio access bearer configuration by means of the radio access bearer identifier, and
establishing Iu RAB data in the network, characterized in that
the re-establishment of the Iu RAB configuration is achieved through operations and maintenance procedures.

Patent application US 2006/0040645 A1 describes techniques for efficiently configuring and reconfiguring calls using a set of default configurations and differential encoding. Thereby a parameter set is divided into a first and a second portion, wherein the first portion comprises a fixed portion common to a plurality of sets, and the second portion comprises a variable portion. The disclosed method compresses the fixed portion by allocating of a radio access bearer identifier thereto.
, the method comprising: dividing each of the parameter sets into a first portion and a second portion, the first portion comprising a fixed portion common to a plurality of sets, and the second portion comprising a variable portion; and compressing the fixed portion through allocation of a radio access bearer, RAB, identifier thereto, wherein the parameter sets each comprise an Iu RAB configuration, the RAB identifier is associated with the RAB within a Public Land Mobile Network, PLMN, characterized in that, the association is achieved via operations and maintenance procedures within the network.

A method of re-establishment of radio access bearers in a network, wherein the radio access bearer sets are compressed following the above method, comprising: transferring the radio access bearer parameter sets between a user equipment and a mobile radio communications network associated with the user equipment, reestablishing previously released radio access bearers in a network upon receipt of the transferred radio access bearer parameter sets, referring to a stored radio access bearer configuration by means of the radio access bearer identifier, and establishing Iu radio access bearer, RAB, data in the network, characterized in that the re-establishment of the Iu RAB configuration is achieved through operations and maintenance procedures.

Through the division of the Iu RAB configuration into a fixed, i.e. common, part and variable part, it becomes possible to advantageously compress the whole configuration through the compression of the fixed part in a particularly advantageous manner through the allocation of a value associated with the RAB within the PLMN (Public Land Mobile Network).

The size of the data that is then available for transfer between, for example, the UE (User Equipment) and the UTRAN (Universal Terrestrial Radio Network), is in the order of a few octets at most, in addition to any parameters that are deemed variable and associated with a particular subscriber to the network.

As a further advantage, the variable portion of the configuration is formed of variable parameters of the configuration.

An advantageous arrangement for compressing the Iu RAB configuration can likewise be advantageously employed both in relation to the storage and transfer of such configuration.

The signaling pay load for a transfer according to the second aspect of the invention is then advantageously limited which serves to achieve efficient transfer of data and thus, in turn, advantageously fast call sep-up times.

The transferring of the Iu RAB configuration can advantageously include the allocation of a set of Iu RAB configurations for each UTRAN (Universal Terrestrial Radio Network)/Core Network (CN) pair within a PLMN (Public Land Mobile Network).

Each such set of Iu RAB configurations can advantageously be allocated a subset of RAB identifiers.

In particular, the RAB identifier and variable parameters of the Iu RAB configuration are arranged to be stored within the UE (User Equipment) for transfer to the UTRAN (Universal Terrestrial Radio Network) as required.

As noted above, the method of transfer of Iu RAB configurations can form part of a call set-up procedure for user equipment.

As will be appreciated from the above, through the use of the present invention, it becomes possible to compress the size of Iu RAB configuration data down to a size which readily allows for fast call set-up times. Such fast call set-up times were sought to be provided in accordance with the above mentioned UK patent application.

The present invention proposes the compression of the Iu RAB signaling data, and which can be achieved in a particularly advantageous manner.

The present invention is described further hereinafter, by way of examples only, and which illustrate, by examples, arrangements by which a network operator can configure the system for two different CN/UTRAN (Core Network/Universal Terrestrial Radio Network) pairs within its PLMN (Public Land Mobile Network).

As will be illustrated further below, the present invention is particularly and advantageously employed in reducing the amount of data to be transported between the UE (User Equipment) and the UTRAN (Universal Terrestrial Radio Network) particularly when relatively fast call set-up times are required.

It has become recognized that a major part of such 2.4 K octets of data comprises the Iu RAB configuration such that the compression of this configuration will advantageously lead to a reduction in signaling overhead on the radio interface and therefore a cast call set-up time.

The present invention takes advantage of the fact that the network operator only ever deploys a subset of RABs in the system. For example, the RAB for "interactive" and "background" configurations is basically common to all parties within the PLMN (Public Land Mobile Network) and there are only a very small number of parameters which might vary in this configuration.

As will be clear from the following, such variable parameters can comprise aspects of priority, pre-emption, guaranteed bit-rate, guaranteed delay, minimum bit-rate, BLER (Block Error), and QoS (Quality of Service) Class, i.e. whether streaming, conversational, background, or interactive.

As defined above, the Iu RAB configuration to be transferred to the UTRAN (Universal Terrestrial Radio Network) can therefore advantageously be partitioned into a fixed part and a variable part, with the fixed part being compressed by the allocation to it, through standard operations and maintenance procedures, of a value associated to the RAB within the PLMN (Public Land Mobile Network).

It should be noted that the size of this value can advantageously be calculated by the operator and will depend on some extent upon a number of RABs that the particular operator supports within the PLMN (Public Land Mobile Network) concerned.

This compression scheme advantageously reduces the 2.4 K octet value down to within the region of 1 octet in addition to any parameters which are deemed variable and associated with the subscriber.

The present invention is advantageous in first proposing a scheme for compressing the Iu RAB signaling data, and for then forwarding that data from the UE (User Equipment) to the Radio Network System (RNS) by way of the Uu interface.

It should of course also be appreciated that the present invention can apply to the network signaling so as to reduce the signaling load on the Iu and network interfaces.

In order to use and efficiently operate the present invention, the network operator is required to allocate, for its PLMN (Public Land Mobile Network), a set of Iu RAB configurations, with one configuration being provided for each UTRAN/CN pair (per manufacturer pair).

For example, if the network operator has two CN (Core Network) and three UTRAN (Universal Terrestrial Radio Network) suppliers, the operator may then have to allocate a total of six sets of compressed Iu RAB configurations. Importantly, each set of Iu RAB configurations is allocated a subset of RAB identifiers so as to identify the particular RAB within each set.

In such scenario, it is this RAB identifier, in addition to the variable parameters associated with the Iu RAB, and the identifier is transferred to the user equipment for storage in the user equipment, and for subsequent provision on an uplink channel during attempted fast call set-up between the UE (User Equipment) and the UTRAN (Universal Terrestrial Radio Network).

Thus, when the user equipment eventually returns the compressed Iu RAB data as part of the attempted fast call set-up procedure, the network is able to readily reconstitute the Iu RAB data on the basis of the RAB identifier by using the RAB identifier to accurately refer to the RAB configuration held and maintained by the operator by means of operations and maintenance procedures.

In the situation in which the user equipment might seek to re-establish contact with a different UTRAN/CN (Universal Terrestrial Radio Network/Core Network) pair on the same PLMN (Public Land Mobile Network), the new UTRAN/CN pair can be arranged to reconstruct the original Iu RAB configuration through interworking the previous UTRAN/CN pair RAB identifiers to RAB identifiers supported by the new UTRAN/CN pair.

The mapping from these RAB identifiers can advantageously be controlled by a means of tables maintained by the network operator.

### Effects of the Invention

According to the present invention, a method for compressing the Iu RAB configurations and likewise a method for transferring such compressed configurations between, for example, the UE and the UTRAN.

### Brief Description of Drawings

FIG. 1 shows a table for a first UTRAN/CN pair.
FIG. 2 shows a table for a second UTRAN/CN pair which has not implemented priority.
FIG. 3 shows mapping rules that may be applied by the second CN/UTRAN.
FIG. 4 shows mapping rules that may be applied by the first CN/UTRAN.
FIG. 5 illustrates an example of PLMN.
FIG. 6 shows signaling messages that are exchanged between UE, RNC, and SGSN according to 3GPP specification.
FIG. 7 is a diagram showing data flow sent from RNC to UE.
FIG. 8 is a diagram showing the setup procedure to reconnect.
FIG. 9 shows a structure of UE.
FIG. 10 shows a structure of SGSN.

### Best Mode for Carrying Out the Invention

The following example shows a method by which the network operator configures the system for two different CN/UTRAN (Core Network/Universal Terrestrial Radio Network) pairs in its PLMN (Public Land Mobile Network) of the system.

There may be a need to have some subtle changes of support between the different UTRANs.

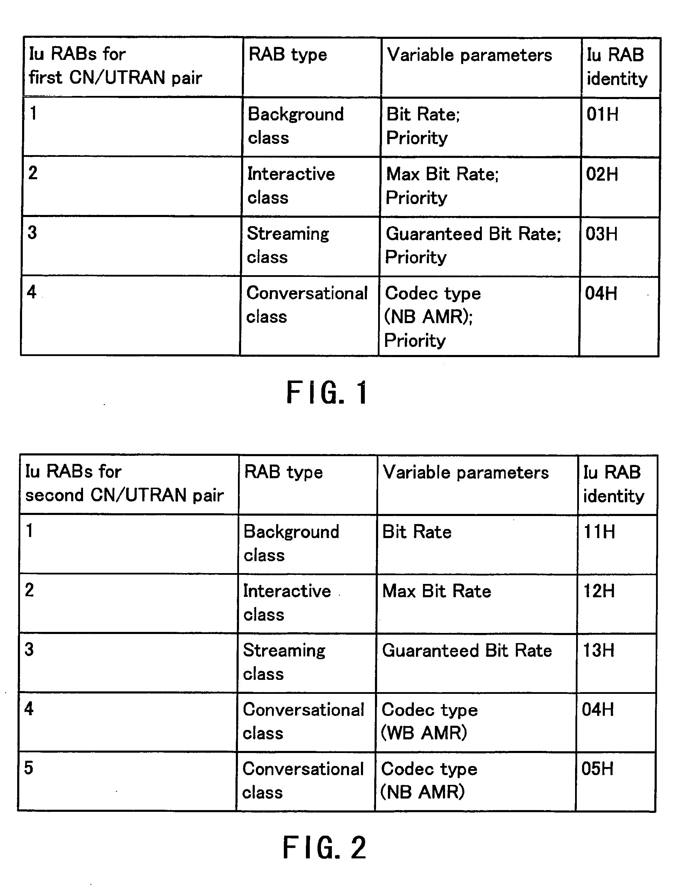

FIG. 1 shows a table for a first UTRAN/CN pair. This UTRAN/CN pair has implemented priority but has not implemented the support of WB AMR (Wideband Adaptive multi-rate).

FIG. 2 shows a table for a second UTRAN/CN pair which has not implemented priority.

It should be noted that in this example, the support of speech is not equal in the two different systems so there is a need to interwork the support of WB AMR to NB AMR (Narrowband Adaptive multi-rate) in the first pair.

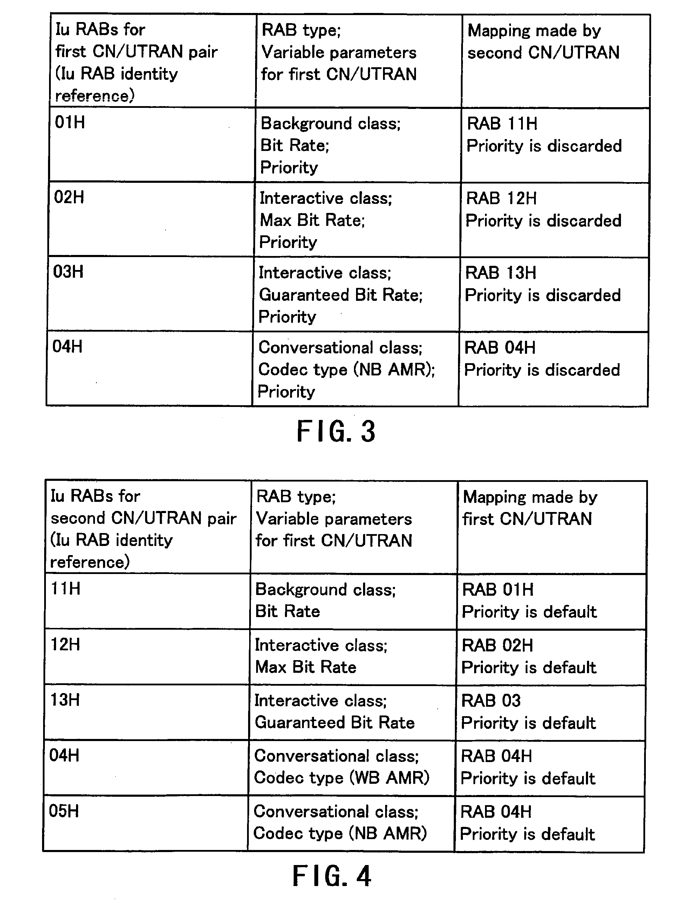

Further, if the mobile (Mobile Equipment) moves from the first CN/UTRAN pair to the second CN/UTRAN pair, mapping rules shown in FIG. 3 may be applied by the second CN/UTRAN.

Further, if the mobile (Mobile Equipment) moves from the second CN/UTRAN pair to the first CN/UTRAN pair, mapping rules shown in FIG. 4 may be applied by the first CN/UTRAN.

Here, the WB AMR (Wideband Adaptive multi-rate) RAB is mapped to a NB AMR (Narrowband Adaptive multi-rate) RAB. Because the priority is not received, the second CN/UTRAN takes a default value until such time as it is informed as to what the priority actually is.

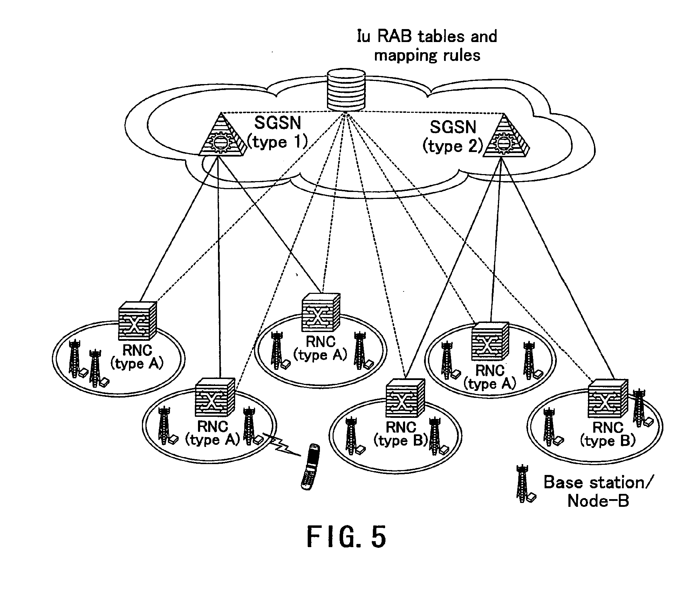

FIG. 5 shows an example of PLMN (Public Land Mobile Network) with 2 SGSN (Serving GPRS Support Node) types and 2 UTRAN types (RNC (Radio Network Controller) with Node-Bs). The full line represents interfaces where Iu connections and RAB can be established. The dashed line represents the Iu RAB tables and mapping rules as defined by the operator. Each RNC and SGSN receives and stores:
- a table of Iu RABs that it can use; and
- mapping rules for Iu RAB identities used by other (RNC, SGSN) pair.

With this example, there are 3 different Iu RAB tables, (RNC A, SGSN 1), (RNC B, SGSN 2), and (RNC A, SGSN 2), and each RNC/SGSN stores one of these tables, plus mapping tables for each Iu RAB from the other two tables.

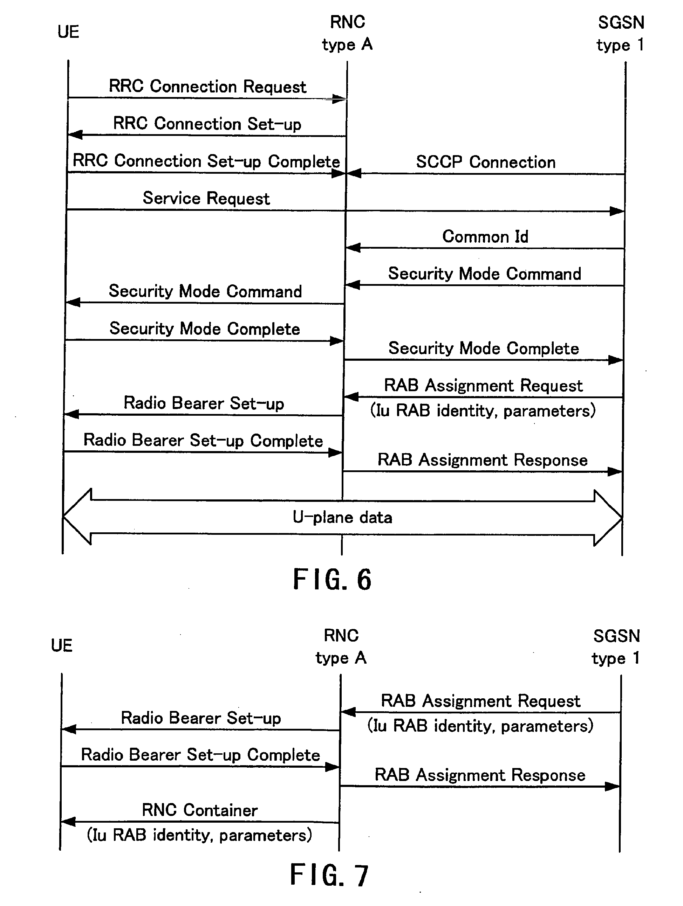

When a connection is established between UE (User Equipment) and RNC (Radio Network Controller) as illustrated in FIG. 6, after the RRC connection to the RNC and the signaling connection to the SGSN (Serving GPRS Support Node) are established, the user requests a service e.g. public internet access which needs a RAB for transmission of user data between UE and SGSN.

According to current 3GPP specification, signaling messages shown in FIG. 6 will be exchanged between UE, RNC, and SGSN.

RRC connection requests will be transmitted from UE to RNC when UE (User Equipment) originates calling or UE is called in.

SGSN transmits to RNC the common ID showing which subset it belongs to.

Using the table of Iu RAB between SGSN (Serving GPRS Support Node) type 1 and RNC type A as defined in the present invention, stored in the SGSN, the SGSN replaces the 'RAB parameters' included in the 'RAB Assignment Request' message with the Iu RAB identity and the associated variable parameters.

Using the Iu RAB identities and the variable parameters, the RNC (Radio Network Controller) knows what RAB is requested by the SGSN (Serving GPRS Support Node), without the need to transmit RAB parameters on the Iu interface. Also, the Iu RAB identity is identity information showing in more detail what RAB to be used and containing the order of few octets.

With existing RAB Assignment Request, the amount of data transferred from SGSN to RNC is 2.4 K octets. However, with the method of the present invention, the amount of data transferred from SGSN to RNC is data amount of only a few octets Iu RAB identity and (variable) parameters. As a result, reducing the amount of transferring data can be provided and fast call set-up times can be achieved.

Also, the network as configured before can provide all the RNCs with mapping rules, so as to translate Iu RAB identity for another (SGSN type, RNC type) and its parameter(s) (if any) into a RAB for this RNC and the SGSN it is connected to.

When furnished with the PLMN ID and also these arrays of data, the receiving UTRAN (Universal Terrestrial Radio Network) can configure the radio resources without informing the CN (Core Network) what RABs are necessary as specified in IDLE state (05/32).

If the UE (User Equipment) is first connected to RNC type A/SGSN type 1, as illustrated in FIG. 5 and FIG. 6, after the RAB is setup, the RNC provides, as illustrated in FIG. 7, Iu RAB identity and parameters to the UE, so that UE stores Iu RAB identity and parameters.

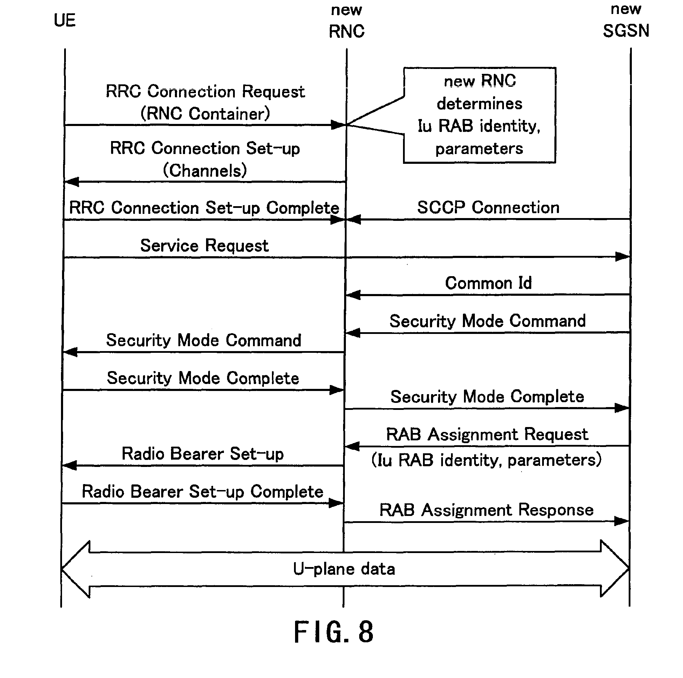

Later, the connection is released, e.g. because the user is no more using the service. Then the user moves into the network. When reconnection is desired, according to the IDLE state, the setup procedure is performed as illustrated in FIG. 8.

Using the Iu RAB identity and parameters provided with the RRC connection request, the new RNC (Radio Network Controller) knows the RAB parameters without any information from the new SGSN (Serving GPRS Support Node), so RNC can setup the physical or transport channels with the UE immediately, without waiting for RAB Assignment Request message:
- if the "Iu RAB identity" sent from the UE belongs to the (new SGSN, new RNC) table:
   This is the case when UE is connecting to RNC type A/SGSN type 1 again: the new RNC can use directly "Iu RAB identity" and its parameters, as if received from new SGSN.
- if the "Iu RAB identity" sent from the UE does not belong to the (new SGSN, new RNC) table:
   This is the case when UE is connecting to RNC type B/SGSN type 1 or RNC type B/SGSN type 2: the new RNC can use the mapping rules to derive a new "Iu RAB identity" and its parameters, as if received from new SGSN.

It is difficult to give a precise implementation. As in general, the transport mechanism and signaling can be completely defined by the operator and need not necessarily be standardized as such as it is a PLMN (Public Land Mobile Network) issue. If this proposal is accepted, the compression of the RABs is essential in order to allow the compression to be both stored and transported by the UE in order to meet the call setup timing requirements.

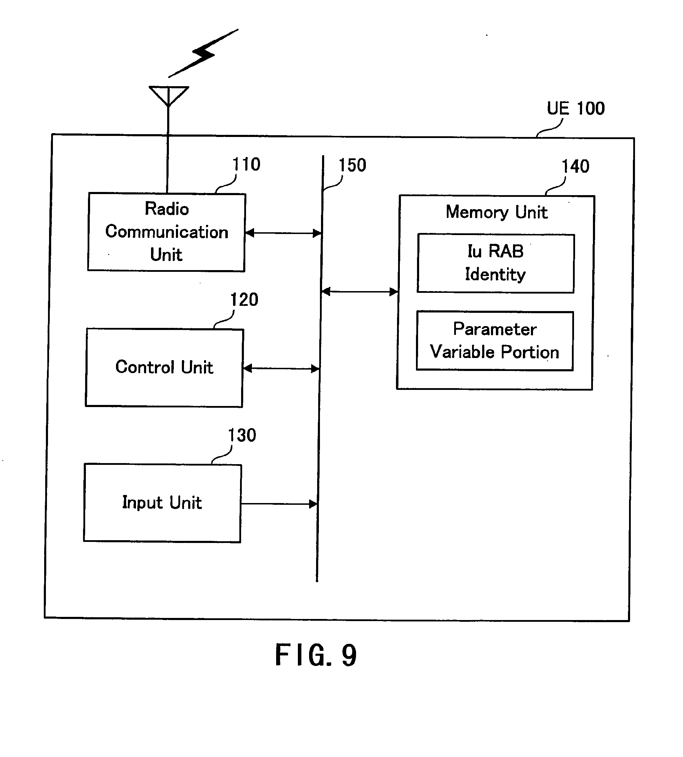

UE (User Equipment) according to this embodiment contains, for example, a structure illustrated in FIG. 9.

UE 100, as illustrated in the drawing, comprises a radio communication unit 110, a control unit 120, an input unit 130, a memory unit 140, and a bus 150. The radio communication unit 110, the control unit 120, the input unit 130, and the memory unit 140 are connected by the bus 150.

The radio communication unit 110, for example, comprises a radio antenna and NIC (Network Interface Card), and transmits and receives data with RNC (Radio Network Controller).

The control unit 120, for example, comprises CPU (Central Processing Unit) and performs, for example, processing data in the radio communication unit 110 and the memory unit 140, transmitting and receiving data with the radio communication unit 110, and storing data in the memory unit 140.

The input unit 130, for example, comprises a numeric-keyboard, accepts inputs from the users of UE 100, and transmits the input contents to the control unit 120.

The memory unit 140, for example, comprises ROM (Read Only Memory) and RAM (Random Access Memory). RAM is used as a work area of the control unit 120, and ROM and RAM store a program for the control unit 120 to perform processing. Also, RAM, for example, stores RAB configuration information (Iu RAB identity, parameters variable portion) and provides RAB configuration information to the control unit 120 if required by the control unit 120.

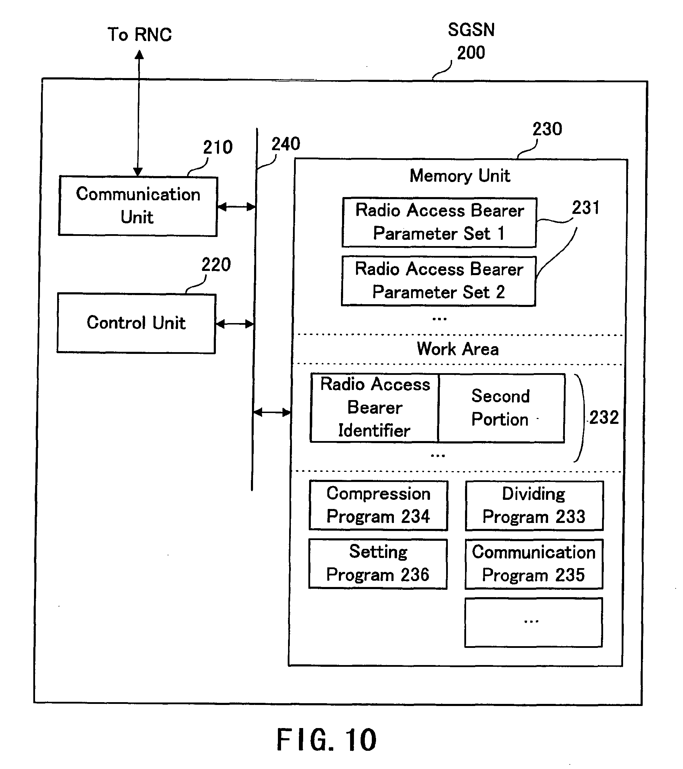

SGSN (Serving GPRS Support Node) according to this embodiment comprises a structure illustrated in FIG. 10.

SGSN 200, as illustrated in the drawing, comprises a communication unit 210, a control unit 220, a memory unit 230, and a bus 240. The communication unit 210, the control unit 220, and the memory unit 230 are connected by the bus 240.

The communication unit 210, for example, comprises NIC (Network Interface Card) and transmits and receives data with RNC (Radio Network Controller) by wired connection.

The control unit 220, for example, comprises CPU (Central Processing Unit) and performs, for example, processing data in the communication unit 210 and the memory unit 230, transmitting and receiving data with the communication unit 210, and storing data in the memory unit 230.

The memory unit 230, for example, comprises ROM (Read Only Memory) and RAM (Random Access Memory). RAM is used as a work area of the control unit 220, and ROM and RAM store a program for the control unit 220 to perform processing.

Specifically, the control unit 220 divides radio access bearer parameter sets 231 stored in ROM or RAM of the memory unit 230, by a dividing program 233 stored in ROM or RAM of the memory unit 230, into fixed portion and variable portion per parameter set. Next, assembling parameters, which are a fixed portion, as a first portion and parameters, which are a variable portion, as a second portion, then it is stored into the work area of RAM of the memory unit 230.

Moreover, the control unit 220 executes compression program 234 stored in the memory unit 230 and compresses the first portion. Then, it stores a set 232 comprising the compressed first portion (radio access bearer identifier) and its associated second portion in RAM of the memory unit 230.

Further, in the memory unit 230, communication program 235 and setting program 236 are stored. The control unit 220 establishes communication with RNC (Radio Network Controller) and UE (User Equipment) by executing the communication program 235 and performs RAB allocation and common ID allocation, etc. by executing the setting program 236. By these processes, for example, it achieves performances such as communication processes, allocation processes, and setting processes described with reference to FIG. 6 to FIG. 8.

Moreover, the present invention is not limited to the above-described embodiments and various modifications and applications thereof are possible.

For example, the structures of such UE, RNC, and SGSN can be changed in any way. Also, anything can be used as a method of dividing parameter sets, a method of compressing the parameters fixed portion, communication method and protocol, and configuration method, etc.

In addition, the RABs are not limited to the contents shown in FIG. 1 to FIG. 4 and these may be changed accordingly. Also, the system structures exemplified in FIG. 5, FIG. 9, and FIG. 10 may also be changed. Moreover, the communication and setting procedure exemplified in FIG. 6 to FIG. 8 may also be changed accordingly.

### Industrial Applicability

The present invention can be applied to the mobile phone sets and the mobile phone network.

## Claims

1. A method of compressing radio access bearer parameter sets, the method comprising dividing each of the parameter sets into a first portion and a second portion, the first portion comprising a fixed portion common to a plurality of sets, and the second portion comprising a variable portion; and compressing the fixed portion through allocation of a radio access bearer, RAB, identifier thereto, wherein
the parameter sets each comprise an Iu RAB configuration,
the RAB identifier is associated with the RAB within a Public Land Mobile Network, PLMN, **characterized in that**,
the association is achieved via operations and maintenance procedures within the network.

2. The method according to Claim 1, wherein the variable portion is formed of variable parameters of the Iu RAB configuration.

3. A method of re-establishment of radio access bearers in a network, wherein the radio access bearer sets are compressed following the method of claim 1,
comprising:
transferring the radio access bearer parameter sets between a user equipment and a mobile radio communications network associated with the user equipment,
re-establishing previously released radio access bearers in a network upon receipt of the transferred radio access bearer parameter sets, referring to a stored radio access bearer configuration by means of the radio access bearer identifier, and
establishing Iu radio access bearer, RAB data in the network,
**characterized in that** the re-establishment of the Iu RAB configuration is achieved through operations and maintenance procedures.

4. The method according to Claim 3, wherein transferring the radio access bearer parameter sets includes allocating a set of Iu RAB configuration for each Universal Terrestrial Radio Network/Core Network, UTRAN/CN, pair.

5. The method according to Claim 3, wherein each set of Iu RAB configuration is allocated with a subset of RAB identifiers.

6. The method according to Claim 3, wherein the variable portion is formed of variable parameters of the Iu RAB configuration, and the RAB identifier and the variable parameters of the Iu RAB configuration are arranged to be stored within the user equipment for transfer to the UTRAN as required.

7. The method according to Claim 3, wherein transferring the radio access bearer parameters sets forms part of a call set-up procedure for the user equipment.

8. The method according to Claim 3, wherein the Iu RAB configuration is held by the network operator.

## Patentansprüche

1. Verfahren zum Komprimieren von Funkzugangsträgerparametersätzen, wobei das Verfahren umfasst: Teilen jedes Parametersatzes in einen ersten Teil und einen zweiten Teil, wobei der erste Teil einen festen Teil, gemeinsam für eine Anzahl an Sätzen, umfasst und der zweite Teil einen variablen Teil umfasst; und Komprimieren des festen Teils durch Zuordnung eines Funkzugangsträger-, RAB, Bezeichners dazu, wobei
die Parametersätze jeweils eine Iu RAB Konfiguration umfassen,
der RAB-Bezeichner mit dem RAB innerhalb eines öffentlichen terrestrischen Mobilfunknetzes, PLMN, verknüpft ist, **dadurch gekennzeichnet, dass**
die Verknüpfung durch Vorgänge und Aufrechterhaltungsprozeduren innerhalb des Netzes erreicht wird.

2. Verfahren gemäß Anspruch 1, wobei der variable Teil aus variablen Parametern der Iu RAB Konfiguration gebildet wird.

3. Verfahren zur Wiederherstellung von Funkzugangsträgern in einem Netz, wobei die Funkzugangsträgersätze gemäß dem Verfahren von Anspruch 1 komprimiert sind, wobei das Verfahren Folgendes umfasst:
Übertragen der Funkzugangsträgerparametersätze zwischen einem Teilnehmergerät und einem Mobilfunkkommunikationsnetz, das mit dem Teilnehmergerät verknüpft ist,
Wiederherstellen von zuvor freigegebenen Funkzugangsträgern in einem Netz bei Empfang der übertragenen Funkzugangsträgerparametersätze unter Bezug auf eine gespeicherte Funkzugangsträgerkonfiguration mittels des Funkzugangsträgerbezeichners und
Wiederherstellen von Iu Funkzugangsträger-, RAB, Daten in dem Netz, **dadurch gekennzeichnet, dass** die Wiederherstellung der Iu RAB Konfiguration durch Vorgänge und Aufrechterhaltungsprozeduren erreicht wird.

4. Verfahren gemäß Anspruch 3, wobei Übertragen der Funkzugangsträgerparametersätze das Zuordnen eines Satzes von Iu RAB Konfiguration für jedes universelle terrestrische Funknetz/Kernnetz-, UTRAN/CN, Paar einschließt.

5. Verfahren gemäß Anspruch 3, wobei jeder Satz von Iu RAB Konfiguration einer Teilmenge von RAB-Bezeichnern zugeordnet wird.

6. Verfahren gemäß Anspruch 3, wobei der variable Teil aus variablen Parametern der Iu RAB Konfiguration gebildet wird und der RAB-Bezeichner und die variablen Parameter der Iu RAB Konfiguration eingerichtet sind, innerhalb des Teilnehmergeräts zur Übertragung an das UTRAN, nach Bedarf, gespeichert zu sein.

7. Verfahren gemäß Anspruch 3, wobei Übertragen der Funkzugangsträgerparametersätze einen Teil der Verbindungsaufbauprozedur für das Teilnehmergerät bildet.

8. Verfahren gemäß Anspruch 3, wobei die Iu RAB Konfiguration durch den Netzbetreiber gehalten wird.

## Revendications

1. Procédé de compression d'ensembles de paramètres de support d'accès radio, le procédé comprenant : la division de chacun des ensembles de paramètres en une première partie et une seconde partie, la première partie comprenant une partie fixe commune à une pluralité d'ensembles, et la seconde partie comprenant une partie variable ; et la compression de la partie fixe par le biais de l'allocation d'un identificateur de support d'accès radio, RAB, à celle-ci, dans lequel
les ensembles de paramètres comprennent chacun une configuration Iu RAB,
l'identificateur RAB est associé au RAB au sein d'un Réseau mobile terrestre public, PLMN (pour Public Land Mobile Network), **caractérisé en ce que**,
l'association est réalisée via des procédures d'exploitation et de maintenance au sein du réseau.

2. Procédé selon la revendication 1, dans lequel la partie variable est formée de paramètres variables de la configuration Iu RAB.

3. Procédé de rétablissement de supports d'accès radio dans un réseau, dans lequel les ensembles de supports d'accès radio sont compressés suivant le procédé de la revendication 1,
comprenant :
le transfert des ensembles de paramètres de support d'accès radio entre un équipement d'utilisateur et un réseau de communications radio mobile associé à l'équipement d'utilisateur,
le rétablissement de supports d'accès radio précédemment libérés dans un réseau lors de la réception des ensembles de paramètres de support d'accès radio transférés, en se référant à une configuration de support d'accès radio stockée au moyen de l'identificateur de support d'accès radio, et
l'établissement de données Iu support d'accès radio RAB, dans le réseau,
**caractérisé en ce que** le rétablissement de la configuration Iu RAB est réalisé par le biais de procédures d'exploitation et de maintenance.

4. Procédé selon la revendication 3, dans lequel le transfert des ensembles de paramètres de support d'accès radio comprend l'allocation d'un ensemble de configuration Iu RAB pour chaque paire Réseau radio terrestre universel/Réseau de coeur, UTRAN/CN (pour Universal Terrestrial Radio Network/Core Network).

5. Procédé selon la revendication 3, dans lequel chaque ensemble de configuration Iu RAB est alloué avec un sous-ensemble d'identificateurs RAB.

6. Procédé selon la revendication 3, dans lequel la partie variable est formée de paramètres variables de la configuration Iu RAB, et l'identificateur RAB et les paramètres variables de la configuration Iu RAB sont agencés pour être stockés à l'intérieur de l'équipement d'utilisateur pour le transfert à l'UTRAN tel que requis.

7. Procédé selon la revendication 3, dans lequel le transfert des ensembles de paramètres de support d'accès radio fait partie d'une procédure d'établissement d'appel pour l'équipement d'utilisateur.

8. Procédé selon la revendication 3, dans lequel la configuration Iu RAB est détenue par l'opérateur de réseau.
